# EUROPÄISCHE PATENTSCHRIFT

(11) **EP 3 736 152 B1**
(45) Veröffentlichungstag und Bekanntmachung des Hinweises auf die Patenterteilung: **29.05.2024**
(21) Anmeldenummer: 20169901.4
(22) Anmeldetag: 16.04.2020
(51) Int. Cl.: B60K 6/365, B60K 6/48, B60K 6/383, B60K 6/387, B60K 6/547, B60K 6/40, F16H 3/44

(54) **ANTRIEBSSTRANG**
DRIVE SYSTEM
CHAÎNE CINÉMATIQUE

(30) Priorität: 07.05.2019 DE 102019206545
(43) Veröffentlichungstag der Anmeldung: 11.11.2020
(73) Patentinhaber: Magna PT B.V. & Co. KG, 74199 Untergruppenbach (DE); Ford Transmissions GmbH, 50735 Köln (DE)
(72) Erfinder: GÜLTLINGER, Johannes, 70374 Stuttgart (DE); SABERI, Jens, 74360 Ilsfeld (DE); BRESK, Marcel, 70435 Stuttgart (DE); HEGERATH, Andreas, 50126 Bergheim (DE)
(74) Vertreter: Rausch, Gabriele

(56) Entgegenhaltungen:
- DE-B3-102017 201 431
- FR-A1- 2 962 697

## Beschreibung

Die vorliegende Erfindung betrifft einen Antriebsstrang, insbesondere für ein Kraftfahrzeug, mit einer Getriebeanordnung, mit einer elektrischen Maschine und einer Verbrennungskraftmaschine.

### Stand der Technik

Hybridisierte Antriebsstränge sind dem Stand der Technik in vielerlei Variationen bekannt geworden. Sie beinhalten eine Getriebeanordnung in der Form eines oder mehrerer Stirn- oder Planetenradgetriebe, einen Antriebsmotor wie eine Verbrennungskraftmaschine und einen weiteren Antriebsmotor wie eine elektrische Maschine, sodass die jeweilige Antriebsleistung beider Maschinen kombiniert mittels einer hybridmotorischen Gangstufe oder separat an den Abtrieb übertragen werden kann.

Die Verbrennungskraftmaschine ist üblicherweise mittels einer Anfahrkupplung mit dem Getriebe koppelbar, wohingegen die elektrische Maschine je nach Bedarf an unterschiedlichen Positionen im Antriebstrang angebunden sein kann.

Ist die elektrische Maschine zwischen der Verbrennungskraftmaschine und dem Getriebe angeordnet oder direkt mit dem Getriebe gekoppelt, können die verbrennungskraftmotorischen Gangstufen von der elektrischen Maschine zumindest teilweise mit genutzt werden. Daraus ergibt sich der Vorteil, dass schon bestehende Getriebe ohne Aufwand einfach um eine elektrische Maschine erweitert werden können.

Auch ist dem Stand der Technik ein Antriebsstrang bekannt geworden, deren elektrische Maschine mit dem Abtrieb gekoppelt ist.

Die Anbindung erfolgt üblicherweise mittels einem Zugmitteltrieb, einer Stirnradstufe oder einem Planetengetriebe, wobei vorzugsweise eine Übersetzungsstufe gewählt wird, mit der die elektrische Maschine in einem effizienten, hohen Drehzahlbereich betrieben werden kann.

Insbesondere hat es sich jedoch vorteilhaft erwiesen, wenn die elektrische Maschine über ein Summiergetriebe in Form eines Planetenradsatzes mit dem Abtrieb gekoppelt ist, indem ein erstes Element des Summiergetriebes mit der Verbrennungskraftmaschine, ein zweites Element des Summiergetriebes mit der elektrischen Maschine und ein drittes Element des Summiergetriebes mit dem Abtrieb verbunden ist, wie es die Schrift DE 10 2016 221 735 A1 offenbart. In dieser Konstellation treffen die Leistungseinträge beider Antriebsmaschinen im Planetenabtriebsradsatz zusammen. Die Drehzahlen beider Antriebsmaschinen sind unabhängig der jeweiligen anderen Antriebsmaschine einstellbar, weshalb sie ähnliche Fahreigenschaften wie stufenlose Getriebe aufweisen können.

Grundsätzlich umfasst ein Summiergetriebe drei Elemente, nämlich ein Sonnenrad, einen Planetenradträger und ein Hohlrad. Auf dem Planetenradträger sind mehrere Planetenräder drehbar gelagert. Welches der drei Elemente dem Sonnenrad, dem Planetenradträger oder dem Hohlrad zugeordnet ist, kann frei gewählt werden. Entscheidend ist, dass das Getriebe, die elektrische Maschine, als auch der Abtrieb an nur je einem Element des Summiergetriebes angebunden sind. So ist beispielsweise das Sonnenrad mit der elektrischen Maschine, der Planetenradträger mit dem Abtrieb und das Hohlrad mit dem Getriebe verbunden. Oder aber das Sonnenrad ist mit dem Abtrieb, der Planetenradträger mit dem Getriebe und das Hohlrad mit der elektrischen Maschine, usw. verbunden.

Die noch nicht veröffentlichte Anmeldeschrift DE102018203563.6 beschreibt einen Antriebsstrang der zuvor beschriebenen Art mit einer elektrischen Maschine, einer Verbrennungskraftmaschine, wobei zwischen einem Summiergetriebe und der Verbrennungskraftmaschine ein dem Summiergetriebe vorgeschaltetes Getriebe in Form von zwei Planetenradsätzen angeordnet ist. In Summe umfasst dieser Antriebsstrang somit drei Planetenradsätze, womit zwei rein elektromotorische Gangstufen, vier rein verbrennungsmotorische Gangstufen und drei hybridmotorische Gangstufen abbildbar sind. Auch das Starten der Verbrennungskraftmaschine mittels der elektrischen Maschine ist mit Einschränkungen und unter Berücksichtigung der Gangstufenwahl bzw. Fahrzeuggeschwindigkeit während der Fahrt möglich.

Aus der DE 10 2014 204 009 A1 ist ein Planetengetriebesystem bekannt, das sowohl mit einem Verbrennungsmotor als auch mit einer elektrischen Maschine arbeitet. Der Planetenradsatz besteht aus einem Simpson-Planetensatz mit zwei Kupplungen und zwei Bremseinrichtungen. In diesem Planetenradsatz wird bei je einem Gang entweder die Doppelsonne des Simpson-Radsatzes oder der Planetenträger angetrieben. Damit sind vier Vorwärtsgangstufen umsetzbar. Mit einer weiteren Bremse ist auch ein Rückwärtsgang möglich.

Aus der DE 10 2017 213 385 A1 ist ein Getriebe für eine Hybridantriebsanordnung bekannt, das aus zwei Planetengetrieben und dazugehörigen Schaltelementen besteht.

Auch in diesem Stand der Technik sind die beiden Sonnenräder miteinander gekoppelt. Es lassen sich mit der Anordnung 4 Vorwärtsgangstufen zwei rein elektrische Gangstufen, eine elektrische, kontinuierlich variable Gangstufe, sowie eine Standladestufe umsetzen.

Die DE 10 2017 201 431 B3 zeigt eine Antriebsvorrichtung mit zwei Planetenradsätzen. In dieser Ausführung sind mit einer Bremse und drei Kupplungen sechs Vorwärtsgangstufen darzustellen. Dabei ist der Verbrennungsmotor parallel zu einer Hauptachse angeordnet, der auch die elektrische Maschine umfasst.

FR 2 962 697 A1 zeigt einen Antriebsstrang für ein Kraftfahrzeug vom Hybridtyp, umfassend eine elektrische Maschine, einen Verbrennungsmotor, einem Getriebe, umfassend ein Planetengetriebe des Motors mit einem Sonnenrad und einem Hohlrad, die jeweils mit der Welle des Verbrennungsmotors durch eine Kupplung mit kontrollierter Steuerung und mit einem festen Teil des Fahrzeugs durch eine unidirektionale Kupplung, verbunden sind, und einen Übertragungspfad der Bewegung an eine Antriebsachse, wobei der Antriebsstrang ein anderes Planetengetriebe aufweist, das mit dem Planetengetriebe des Motors und der elektrischen Maschine gekoppelt ist, wobei das andere Getriebe eine Kupplung mit kontrollierter Steuerung trägt, die dieses Getriebe mit einem festen Teil des Antriebsstrangs oder mit dem Übertragungspfad der Bewegung verbindet.

Dabei werden Freiläufe als unidirektionale Kupplungen eingesetzt.

Dennoch bleibt die Aufgabe bestehen, derartige Antriebsstränge hinsichtlich Baugröße und Kosten zu verbessern und ein Starten der Verbrennungskraftmaschine durch die elektrische Maschine in allen Fahrsituation, insbesondere unabhängig von der Fahrzeuggeschwindigkeit zu ermöglichen.

Gelöst wird diese Aufgabe durch einen Antriebsstrang gemäß Anspruch 1. Bevorzugte Ausführungsformen sind in den abhängigen Ansprüchen beschrieben.

Ferner ermöglicht der erfindungsgemäße Antriebsstrang das Starten der Verbrennungskraftmaschine mithilfe der elektrischen Maschine, wobei eine Antriebsleistung von der elektrischen Maschine über die Getriebeanordnung an die Verbrennungskraftmaschine übertragbar ist, um diesen anzutreiben, wobei der erste Planetenradsatz ausgelegt ist, um eine Mehrzahl an Gangstufen einlegen zu können und wobei zum Starten der Verbrennungskraftmaschine eine bestimmte Gangstufe, insbesondere eine Gangstufe im ersten Planetenradsatz in Abhängigkeit eines Fahrparameters eingelegt wird. Der Fahrparameter kann beispielsweise eine Leistungsanforderung eines Kraftfahrzeugführers, eine aktuelle Geschwindigkeit eines Kraftfahrzeugs, ein Ladezustand einer Batterie, eine ermittelte Fahrbahnneigung und/oder eine ermittelte Ampelschaltung sein.

Bevorzugt bleibt die im ersten Planetenradsatz eingelegte Gangstufe eingelegt, wenn die Verbrennungskraftmaschine gestartet wurde, wobei anschließend eine Antriebsleistung der Verbrennungskraftmaschine an die Getriebeanordnung und somit an das Summiergetriebe übertragen wird.

### Beispiel der Erfindung

Die Erfindung wird nachfolgend beispielhaft unter Bezugnahme auf die beigefügten Zeichnungen beschrieben.
**Fig. 1** zeigt ein Ausführungsbeispiel eines erfindungsgemäßen Antriebsstrangs.
**Fig. 2** zeigt einen nicht erfindungsgemäßen Antriebsstrang.
**Fig. 3** zeigt ein Schaltschemata für einen Antriebsstrang nach Figur 1 bzw. Figur 2.

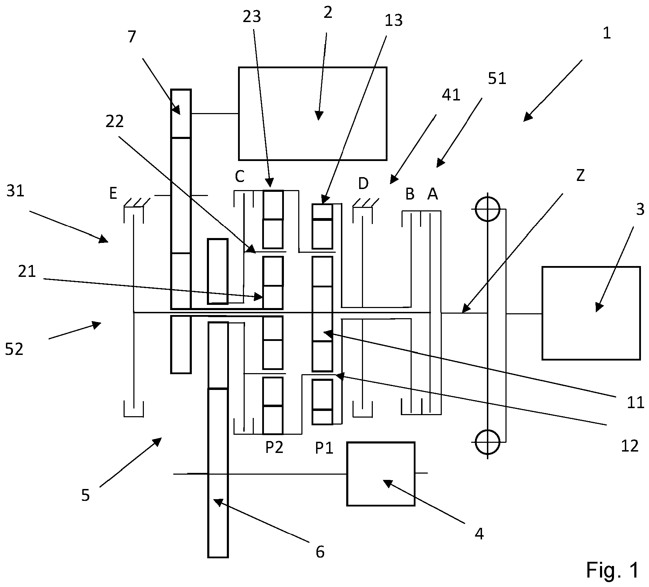

Der in Fig. 1 gezeigte Antriebsstrang 1 weist eine Verbrennungskraftmaschine 3, ein Massenschwungrad, eine erste Schaltanordnung 51, eine Getriebeanordnung 5, einen mit der Getriebeanordnung wirkverbundenen bzw. drehverbundenen Abtrieb 4 und eine zweite Schaltanordnung 52 auf, wobei diese Komponenten entlang der Hauptachse Z angeordnet sind. Zudem ist mit der Getriebeanordnung eine elektrische Maschine 2 wirkverbunden.

Die Getriebeanordnung 5 umfasst einen ersten Planetenradsatz P1 und einen zweiten Planetenradsatz P2.

Der zweite Planetenradsatz P2 ist als Summiergetriebe ausgebildet und weist ein erstes Element in Form eines Sonnenrads 21 auf, welches mit der elektrischen Maschine 2 drehverbunden ist. Zudem weist der zweite Planetenradsatz P2 ein zweites Element in Form eines Planetenradträgers 22 auf, welches mit dem Abtrieb 4 drehverbunden ist. Ein drittes Element des zweiten Planetenradsatzes ist in Form eines Hohlrads 23 ausgebildet, welches mit dem ersten Planetenradsatz P1 drehverbunden ist.

Der Planetenradträger 22 ist über eine Abtriebskonstantenzahnradstufe 6 mit dem Abtrieb 4 wirkverbunden.

Der erste Planetenradsatz P1 weist ein erstes Element in Form eines Sonnenrads 11 auf. Das Sonnenrad 11 ist mittels eines Bremselements E gegen ein Gehäuse blockierbar und zudem mittels einer Kupplung A mit der Verbrennungskraftmaschine 3 verbindbar. Die Kupplung A ist als Anfahrkupplung ausgebildet.

Der erste Planetenradsatz P1 weist ein zweites Element in Form eines Planetenradträgers 12 auf, der fest mit dem Hohlrad 23 des zweiten Planetenradsatzes P2 drehverbunden ist. Der erste Planetenradsatz P1 und der zweite Planetenradsatz P2 sind unmittelbar axial benachbart angeordnet.

Der erste Planetenradsatz P1 weist zudem ein drittes Element in Form eines Hohlrads 13 auf, das mittels einem Bremselement D gegen das Gehäuse blockierbar ist. Erfindungsgemäß ist das Bremselement D als eine Bremse 41 ausgebildet.

Ferner kann das Hohlrad 13 mittels einer Kupplung B mit der

Verbrennungskraftmaschine 3 drehverbunden werden.

Eine Kupplung C erlaubt das Verblocken des zweiten Planetengetriebes P2, in dem das Hohlrad 23 mit dem Sonnenrad 21 drehverbunden wird.

Die elektrische Maschine 2 ist über eine Zahnradstufe 7 mit dem Sonnenrad 21 des zweiten Planetenradsatzes P2 wirkverbunden und parallel zur Hauptachse Z angeordnet.

Vorzugsweise ist die Zahnradstufe 7 axial zwischen dem Bremselement E und der Abtriebskonstantenzahnradstufe 6 angeordnet.

Die Kupplungen A und B und das Bremselement D sind der ersten Schaltanordnung 51 zugeordnet, wobei die Schaltanordnung 51 im Wesentlichen axial zwischen der Getriebeanordnung 5 und der Verbrennungskraftmaschine 3 angeordnet ist. Diese erste Schaltanordnung 51 ist somit dazu ausgebildet, zwei Übersetzungen im ersten Planetenradsatz P1 einzurichten, je nachdem ob dieser durch die erste Schaltanordnung 51 blockiert oder gebremst wird.

Das Sonnenrad 11 des ersten Planetenradsatzes P1 ist ferner mittels dem Bremselement E gegen das Gehäuse blockierbar. Das Bremselement E ist der zweiten Schaltanordnung 52 zugeordnet. Hierdurch ist eine weitere, dritte Übersetzung an dem ersten Planetenradsatz P1 einrichtbar. Die erste Schaltanordnung 51 und die zweite Schaltanordnung 52 sind auf gegenüberliegenden Seiten der Getriebeanordnung 5 angeordnet. Diese Anordnung ermöglicht es, eine zu der ersten Schaltanordnung 51 weitere, zweite Schaltanordnung 52 zum Schalten des ersten Planetenradsatzes P1 im Antriebsstrang 1 unterzubringen.

Das Sonnenrad 11 des ersten Planetenradsatzes P1 ist drehbar zu dem Sonnenrad des zweiten Planetenradsatzes P2 gelagert. Ferner sind das Hohlrad 13 und das Sonnenrad 11 des ersten Planetenradsatzes P1 zueinander drehbar gelagert.

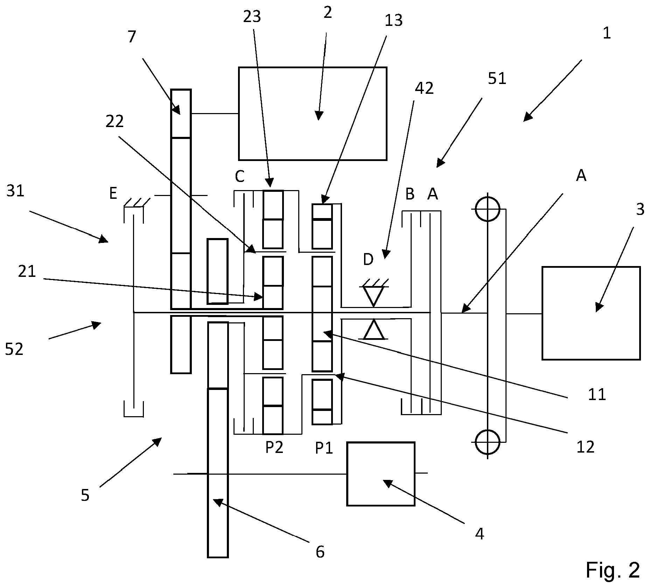

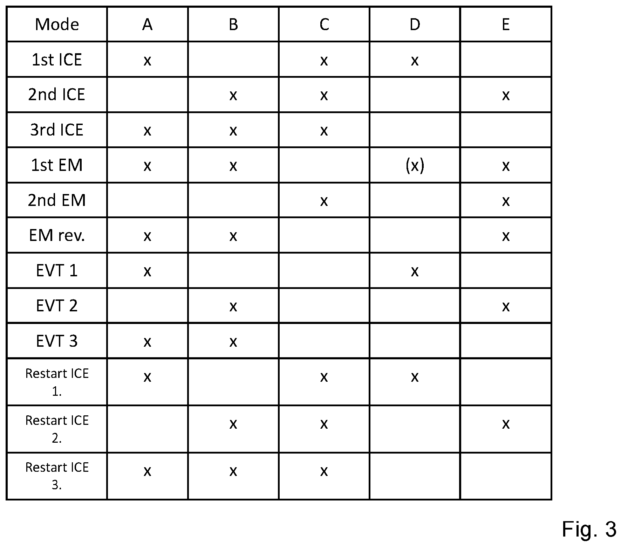

Der in Fig. 2 gezeigte, nicht erfindungsgemäße Antriebsstrang enthält im Wesentlichen die gleichen Komponenten und einen ähnlichen Aufbau wie das in Fig. 1 gezeigte Ausführungsbeispiel, weshalb entsprechend die gleichen Bezugszeichen versehen wurden. Das Bremselement D ist in dieser Ausführungsform als nicht erfindungsgemäßer Freilauf 42 ausgebildet. Die gemäß Fig. 3 abgebildeten Schaltschemata gelten sowohl für den erfindungsgemäßen Antriebsstrang nach Figur 1, als auch für den Antriebsstrang nach Figur 2.

So ist gemäß Fig. 3 eine erste verbrennungsmotorische Gangstufe eingelegt, wenn die Kupplungen A und C und das Bremselement D geschlossen sind. Eine zweite verbrennungsmotorische Gangstufe ist eingelegt, wenn die Kupplungen B und C und das Bremselement E geschlossen sind. Eine dritte verbrennungsmotorische Gangstufe ist eingelegt, wenn die Kupplungen A, B und C geschlossen sind.

Eine erste elektromotorische Gangstufe ist gemäß Fig. 3 dann eingelegt, wenn die Kupplungen A und B, als auch das Bremselement E geschlossen sind. Statt dem Bremselement E kann alternativ auch das Bremselement D geschlossen werden. Eine zweite elektromotorische Gangstufe ist eingelegt, wenn die Kupplung C und das Bremselement E geschlossen sind. Die erste elektromotorische Gangstufe kann vorzugsweise auch als elektromotorische Rückwärtsgangstufe genutzt werden. Gemäß Fig. 3 eine erste hybridmotorische Gangstufe (EVT1) eingelegt, wenn die Kupplung A und das Bremselement E geschlossen sind. Eine zweite hybridmotorische Gangstufe (EVT2) ist eingelegt, wenn die Kupplung B und das Bremselement E geschlossen sind. Eine dritte hybridmotorische Gangstufe (EVT3) ist eingelegt, wenn die Kupplungen A und B geschlossen sind.

Eine hybridmotorische Gangstufe ist also eine Gangstufe, die eine Antriebsleistung der Verbrennungskraftmaschine 3, als auch eine Antriebsleistung der elektrischen Maschine 2 als Summenleistung im Summiergetriebe zusammenführt und an den Abtrieb 4 weiterleitet.

Ein Starten der Verbrennungskraftmaschine 3 mithilfe der elektrische Maschine 2 und eine anschließende Weiterfahrt mit der zuvor eingelegten Gangstufe ist dann eingerichtet, wenn eine der hybridmotorischen Gangstufen zum Starten der Verbrennungskraftmaschine genutzt und darüber hinaus die Kupplung C geschlossen wird. Nachdem die Verbrennungskraftmaschine auf die gewünschte Zieldrehzahl gebracht wurde, wird die Kupplung C geöffnet. Die im ersten Planetenradsatz eingelegte Gangstufe bleibt somit eingelegt, sodass anschließend eine Antriebsleistung der Verbrennungskraftmaschine in das Summiergetriebe bzw. dem zweiten Planetenradsatz eingeleitet werden kann.

### Bezugszeichenliste

- P1: Erster Planetenradsatz
- P2: Zweiter Planetenradsatz
- A: Kupplung
- B: Kupplung
- C: Kupplung
- D: Bremselement
- E: Bremselement
- Z: Hauptachse
- 1: Antriebsstrang
- 2: Elektrische Maschine
- 3: Verbrennungskraftmaschine
- 4: Abtrieb
- 5: Getriebeanordnung
- 6: Abtriebskonstantenzahnradstufe
- 7: Zahnradstufe
- 11: Sonnenrad des ersten Planetenradsatzes
- 12: Planetenradträger des ersten Planetenradsatzes
- 13: Hohlrad des ersten Planetenradsatzes
- 21: Sonnenrad des zweiten Planetenradsatzes
- 22: Planetenradträger des zweiten Planetenradsatzes
- 23: Hohlrad des zweiten Planetenradsatzes
- 31: Bremse
- 41: Bremse
- 42: Freilauf
- 51: Erste Schaltanordnung
- 52: Zweite Schaltanordnung

## Patentansprüche

1. Antriebsstrang (1), insbesondere für ein Kraftfahrzeug, mit einer Verbrennungskraftmaschine (3), einer ersten Schaltanordnung (51), einer Getriebeanordnung (5), einem mit der Getriebeanordnung wirkverbundenen oder drehverbundenen Abtrieb (4) und eine zweite Schaltanordnung (52), wobei diese Komponenten entlang einer Hauptachse (Z) angeordnet sind und die Getriebeanordnung (5) einen ersten und einen zweiten Planetenradsatz (P1, P2) aufweist, wobei das Sonnenrad (11) des ersten Planetenradsatz (P1) mittels einer Kupplung (A) mit der Verbrennungskraftmaschine (3) verbindbar ist, wobei der zweite Planetenradsatz (P2) als ein Summiergetriebe ausgebildet ist und mit dem ersten Planetenradsatz (P1), mit einem elektrischen Motor (2) und mit dem Abtrieb (4) gekoppelt ist,
wobei das Sonnenrad (11) des ersten Planetenradsatzes (P1) ferner mittels eines Bremselements (E) mit einem Gehäuse verbindbar ist, wobei die Kupplung (A) und das Bremselement (E), auch an der Hauptachse (Z) und auf gegenüberliegenden Seiten der Getriebeanordnung (5) angeordnet sind und das Sonnenrad (11) zu einem Sonnenrad (21) des zweiten Planetenradsatzes (P2) drehbar gelagert ist und der Planetenradträger (12) des ersten Planetenradsatzes (P1) mit dem zweiten Planetengetriebe (P2) gekoppelt ist und wobei ein Hohlrad (13) des ersten Planetengetriebes (P1) mittels einer weiteren Kupplung (B) mit dem Verbrennungsmotor (3) verbindbar ist, und wobei das Hohlrad (13) des ersten Planetenradsatzes (P1) ferner mittels eines Bremselements (D) mit dem Gehäuse verbindbar ist,
**dadurch gekennzeichnet, dass** das Bremselement (D) als eine Bremse (41) ausgeführt ist.

2. Antriebsstrang (1) nach Anspruch 1, **dadurch gekennzeichnet, dass** der erste Planetenradsatz (P1) axial zwischen der Kupplung (A) und dem zweiten Planetenradsatz (P2) angeordnet ist.

3. Antriebsstrang (1) nach Anspruch 1 oder 2, **dadurch gekennzeichnet, dass** der erste Planetenradsatz (P1) in Kraftflussrichtung zwischen der Kupplung (A) und dem zweiten Planetenradsatz (P2) angeordnet ist.

4. Antriebsstrang (1) nach einem der vorhergehenden Ansprüche, **dadurch gekennzeichnet, dass** die Getriebeanordnung (5) ausschließlich zwei Planetenradsätze (P1, P2) umfasst.

5. Antriebsstrang (1) nach einem der vorhergehenden Ansprüche, **dadurch gekennzeichnet, dass** das Bremselement (E) als eine Bremse (31) ausgebildet ist.

6. Antriebsstrang (1) nach Anspruch 1, **dadurch gekennzeichnet, dass** die Kupplung A, die Kupplung B und das Bremselement D eine erste Schaltanordnung (51) ausbilden, wobei das Bremselement E eine zweite Schaltanordnung (52) ausbildet und wobei die erste und die zweite Schaltanordnung (51,52) auf gegenüberliegenden Seiten der Getriebeanordnung (5) angeordnet sind.

7. Antriebsstrang (1) nach einem der vorhergehenden Ansprüche, **dadurch gekennzeichnet, dass** das Hohlrad (13) des ersten Planetenradsatzes (P1) und das Sonnenrad (11) des ersten Planetenradsatzes (P1) drehbar zueinander gelagert sind.

8. Antriebsstrang (1) nach einem der vorhergehenden Ansprüche, **dadurch gekennzeichnet, dass** die elektrische Maschine (2) parallel zur Hauptachse (Z) angeordnet und über eine Zahnradstufe (7) mit dem Sonnenrad (21) des zweiten Planetenradsatzes (P2) gekoppelt ist und wobei die Zahnradstufe (7) axial zwischen dem Bremselement (E) und einer Abtriebskonstantenzahnradstufe (6) angeordnet ist.

9. Antriebsstrang (1) nach einem der vorhergehenden Ansprüche, **dadurch gekennzeichnet, dass** das Hohlrad (23) des zweiten Planetenradsatzes (P2) mit dem Planetenradträger (12) des ersten Planetenradsatzes (P1) verbunden ist, wobei der Planetenradträger (22) des zweiten Planetenradsatzes (P2) mit dem Abtrieb (4) gekoppelt ist.

## Claims

1. Drive system (1), in particular for a motor vehicle, having an internal combustion engine (3), having a first shift arrangement (51), having a transmission arrangement (5), having an output (4) which is operatively connected or rotationally connected to the transmission arrangement, and having a second shift arrangement (52), wherein these components are arranged along a main axis (Z) and the transmission arrangement (5) has a first and a second planetary gear set (P1, P2), wherein the sun gear (11) of the first planetary gear set (P1) is connectable to the internal combustion engine (3) by means of a clutch (A), wherein the second planetary gear set (P2) is in the form of a summing transmission and is coupled to the first planetary gear set (P1), to an electric motor (2) and to the output (4),
wherein the sun gear (11) of the first planetary gear set (P1) is furthermore connectable to a housing by means of a braking element (E), wherein the clutch (A) and the braking element (E) are arranged on the main axis (Z) too and on opposite sides of the transmission arrangement (5) and the sun gear (11) is mounted so as to be rotatable in relation to a sun gear (21) of the second planetary gear set (P2) and the planet gear carrier (12) of the first planetary gear set (P1) is coupled to the second planetary gear set (P2), and wherein a ring gear (13) of the first planetary gear set (P1) is connectable to the internal combustion engine (3) by means of a further clutch (B), and wherein the ring gear (13) of the first planetary gear set (P1) is furthermore connectable to the housing by means of a braking element (D), **characterized in that** the braking element (D) is in the form of a brake (41).

2. Drive system (1) according to Claim 1, **characterized in that** the first planetary gear set (P1) is arranged axially between the clutch (A) and the second planetary gear set (P2).

3. Drive system (1) according to Claim 1 or 2, **characterized in that** the first planetary gear set (P1) is arranged between the clutch (A) and the second planetary gear set (P2) in a direction of power flow.

4. Drive system (1) according to one of the preceding claims, **characterized in that** the transmission arrangement (5) comprises exclusively two planetary gear sets (P1, P2).

5. Drive system (1) according to one of the preceding claims, **characterized in that** the braking element (E) is in the form of a brake (31).

6. Drive system (1) according to Claim 1, **characterized in that** the clutch (A), the clutch (B) and the braking element (D) form a first shift arrangement (51), wherein the braking element (E) forms a second shift arrangement (52), and wherein the first and second shift arrangements (51, 52) are arranged on opposite sides of the transmission arrangement (5).

7. Drive system (1) according to one of the preceding claims, **characterized in that** the ring gear (13) of the first planetary gear set (P1) and the sun gear (11) of the first planetary gear set (P1) are mounted so as to be rotatable in relation to one another.

8. Drive system (1) according to one of the preceding claims, **characterized in that** the electric machine (2) is arranged parallel to the main axis (Z) and is coupled via a gearwheel stage (7) to the sun gear (21) of the second planetary gear set (P2), and wherein the gearwheel stage (7) is arranged axially between the braking element (E) and an output constant gearwheel stage (6).

9. Drive system (1) according to one of the preceding claims, **characterized in that** the ring gear (23) of the second planetary gear set (P2) is connected to the planet gear carrier (12) of the first planetary gear set (P1), wherein the planet gear carrier (22) of the second planetary gear set (P2) is coupled to the output (4).

## Revendications

1. Chaîne cinématique (1), notamment pour un véhicule automobile, avec un moteur à combustion interne (3), un premier agencement de changement de vitesse (51), un agencement de transmission (5), une sortie (4) en liaison fonctionnelle ou en liaison de rotation avec l'agencement de transmission et un deuxième agencement de changement de vitesse (52), ces composants étant agencés le long d'un axe principal (Z) et l'agencement de transmission (5) présentant un premier et un deuxième train planétaire (P1, P2), la roue solaire (11) du premier train planétaire (P1) pouvant être reliée au moteur à combustion interne (3) au moyen d'un embrayage (A), le deuxième train planétaire (P2) étant configuré sous la forme d'une transmission totalisatrice et étant couplé au premier train planétaire (P1), à un moteur électrique (2) et à la sortie (4),
la roue solaire (11) du premier train planétaire (P1) pouvant en outre être reliée à un carter au moyen d'un élément de freinage (E), l'embrayage (A) et l'élément de freinage (E) étant également agencés sur l'axe principal (Z) et sur des côtés opposés de l'agencement de transmission (5) et la roue solaire (11) étant montée de manière rotative par rapport à une roue solaire (21) du deuxième train planétaire (P2) et le porte-satellites (12) du premier train planétaire (P1) étant couplé au deuxième engrenage planétaire (P2) et une couronne (13) du premier engrenage planétaire (P1) pouvant être reliée au moteur à combustion (3) au moyen d'un autre embrayage (B), et la couronne (13) du premier train planétaire (P1) pouvant en outre être reliée au carter au moyen d'un élément de freinage (D),
**caractérisé en ce que** l'élément de freinage (D) est réalisé sous la forme d'un frein (41).

2. Chaîne cinématique (1) selon la revendication 1, **caractérisée en ce que** le premier train planétaire (P1) est agencé axialement entre l'embrayage (A) et le deuxième train planétaire (P2).

3. Chaîne cinématique (1) selon la revendication 1 ou 2, **caractérisée en ce que** le premier train planétaire (P1) est agencé entre l'embrayage (A) et le deuxième train planétaire (P2) dans la direction du flux de forces.

4. Chaîne cinématique (1) selon l'une quelconque des revendications précédentes, **caractérisée en ce que** l'agencement de transmission (5) comprend exclusivement deux trains planétaires (P1, P2).

5. Chaîne cinématique (1) selon l'une quelconque des revendications précédentes, **caractérisée en ce que** l'élément de freinage (E) est configuré sous la forme d'un frein (31).

6. Chaîne cinématique (1) selon la revendication 1, **caractérisée en ce que** l'embrayage A, l'embrayage B et l'élément de freinage D forment un premier agencement de changement de vitesse (51), l'élément de freinage E formant un deuxième agencement de changement de vitesse (52), et le premier et le deuxième agencement de changement de vitesse (51, 52) étant agencés sur des côtés opposés de l'agencement de transmission (5).

7. Chaîne cinématique (1) selon l'une quelconque des revendications précédentes, **caractérisée en ce que** la couronne (13) du premier train planétaire (P1) et la roue solaire (11) du premier train planétaire (P1) sont montées de manière rotative l'une par rapport à l'autre.

8. Chaîne cinématique (1) selon l'une quelconque des revendications précédentes, **caractérisée en ce que** la machine électrique (2) est agencée parallèlement à l'axe principal (Z) et est couplée à la roue solaire (21) du deuxième train planétaire (P2) par l'intermédiaire d'un étage de roues dentées (7), et l'étage de roues dentées (7) étant agencé axialement entre l'élément de freinage (E) et un étage de roues dentées à constante de sortie (6).

9. Chaîne cinématique (1) selon l'une quelconque des revendications précédentes, **caractérisée en ce que** la couronne (23) du deuxième train planétaire (P2) est reliée au porte-satellites (12) du premier train planétaire (P1), le porte-satellites (22) du deuxième train planétaire (P2) étant couplé à la sortie (4).
